**Europäisches Patentamt**

**European Patent Office**

**Office européen des brevets**

(19)

(11) Veröffentlichungsnummer : **0 075 696**
**B1**

(12)

# EUROPÄISCHE PATENTSCHRIFT

(45) Veröffentlichungstag der Patentschrift :
**11.11.87**

(51) Int. Cl.⁴ : **H 04 N   3/15**, H 04 N   5/243

(21) Anmeldenummer : **82107300.4**

(22) Anmeldetag : **11.08.82**

(54) Zweidimensionaler Halbleiter-Bildsensor mit Steuerung oder Regelung der Integrationszeit.

(30) Priorität : **25.09.81 DE 3138240**

(43) Veröffentlichungstag der Anmeldung :
**06.04.83 Patentblatt 83/14**

(45) Bekanntmachung des Hinweises auf die Patenterteilung : **11.11.87 Patentblatt 87/46**

(84) Benannte Vertragsstaaten :
**BE FR GB IT NL**

(56) Entgegenhaltungen :
**GB-A- 2 008 889**
**US-A- 3 931 463**

(73) Patentinhaber : **Siemens Aktiengesellschaft Berlin und München**
**Wittelsbacherplatz 2**
**D-8000 München 2 (DE)**

(72) Erfinder : **Koch, Rudolf, Dr.**
**Goerdelerstrasse 18**
**D-8025 Unterhaching (DE)**
Erfinder : **Herbst, Heiner, Dr.**
**Anechostrasse 29a**
**D-8000 München 82 (DE)**

Jouve, 18, rue St-Denis, 75001 Paris, France

EP 0 075 696 B1

## Beschreibung

Die Erfindung bezieht sich auf einen zweidimensionalen Halbleiter-Bildsensor nach dem Oberbegriff des Anspruchs 1.

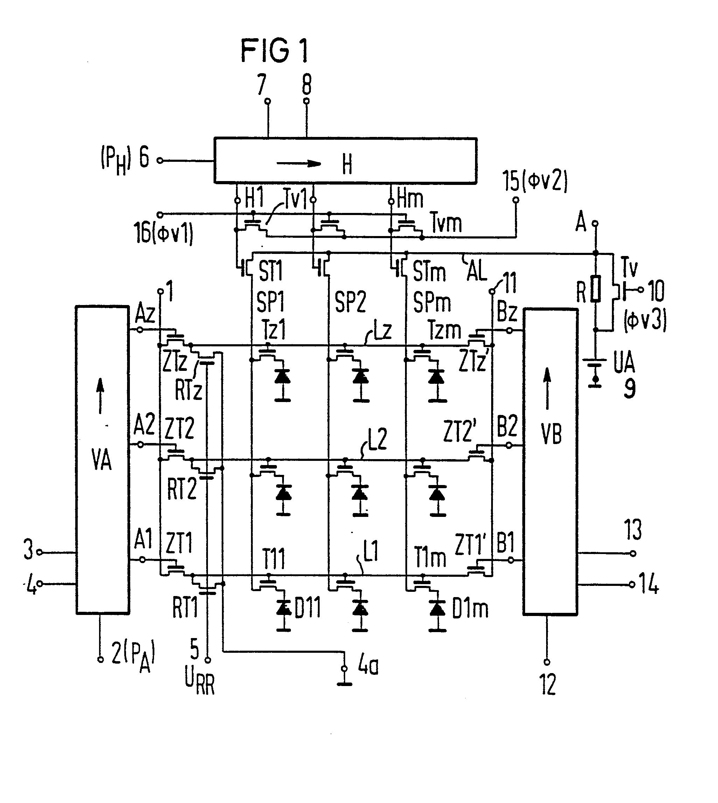

Solche Bildsensoren sind z. B. aus der GB-A-2 008 889 und aus dem IEEE Journal of Solid-State Circuits, Vol. SC-15, No. 4, August 1980, Seiten 747-752, insb. Fig. 1, bekannt. Der Erfindung liegt die Aufgabe zugrunde, einen Bildsensor dieser Art anzugeben, der hinsichtlich der Integrationszeit der Sensorelemente steuerbar oder regelbar ist. Das wird erfindungsgemäß durch eine Ausbildung des Bildsensors nach dem kennzeichnenden Teil des Anspruchs 1 erreicht.

Der mit der Erfindung erzielbare Vorteil liegt insbesondere darin, daß die Integrationszeit der Sensorelemente innerhalb weiter Grenzen in kleinen Schritten variierbar ist, so daß eine genaue Steuerung bzw. Regelung des Bildsensors erfolgen kann.

Die Ansprüche 2 bis 7 betreffen bevorzugte Ausgestaltungen und Weiterbildungen der Erfindung, während die Ansprüche 8 bis 10 auf Verfahren zum Betrieb des Halbleiter-Bildsensors gerichtet sind, während der PA11 auf eine Verwendung des zweidimensionalen Bildsensors nach einem der Ansprüche 1 bis 7 gerichtet ist.

Die Erfindung wird nachfolgend anhand der Zeichnung näher erläutert. Dabei zeigt :

Fig. 1 das Prinzipschaltbild eines nach der Erfindung ausgebildeten, zweidimensionalen Halbleiter-Bildsensors,

Fig. 2 Spannungs-Zeit-Diagramme zur Erläuterung von Fig. 1,

Fig. 3 eine Steuerschaltung, die die Schaltung nach Fig. 1 ergänzt,

Fig. 4 eine zusätzliche Schaltung, die die Schaltungen nach Fig. 1 und Fig. 3 zu einem geschlossenen Regelkreis ergänzt, und

Fig. 5 eine elektronische Kamera in schematischer Darstellung, in die ein Halbleiter-Bildsensor nach Fig. 1 eingesetzt ist.

In Fig. 1 ist eine monolithisch integrierbare Schaltung mit einem zweidimensionalen Halbleiter-Bildsensor dargestellt, der aus Fotodioden bestehende, in Zeilen und Spalten angeordnete Sensorelemente aufweist. Die in der ersten Zeile angeordneten Fotodioden sind mit D11 bis D1m bezeichnet. In Serie zu diesen sind jeweils die Schaltstrecken von Auswahltransistoren T11 bis T1m vorgesehen, deren Gates mit einer gemeinsamen Zeilenleitung L1 verbunden sind. L1 ist über die Schaltstrecke eines Zeilenauswahltransistors ZT1 mit einem Anschluß 1 verbunden, der mit einer konstanten Spannung $V_{DD}$ beschaltet ist. Das Gate von ZT1 liegt an einem Parallelausgang A1 eines Vertikal-Schieberegisters VA, das einen Signaleingang 2 und Taktimpulseingänge 3 und 4 aufweist. Weiterhin ist die Zeilenleitung L1 über die Schaltstrecke eines Rücksetztransistors RT1 mit einem auf Bezugspotential liegenden Schaltungspunkt 4a verbunden. Das Gate von RT1 liegt an einem Anschluß 5, der mit einer Spannung $U_{RR}$ beschaltet ist. Die weiteren Fotodioden und Auswahltransistoren des Bildsensors sind in analoger Weise Zeilenleitungen L2 bis Lz zugeordnet, die über Zeilenauswahltransistoren ZT2 bis ZTz ebenfalls an den Anschluß 1 geführt sind. Die Gates von ZT2 bis ZTz sind an die Parallelausgänge A2 bis Az des Schieberegisters VA gelegt. Weiterhin sind Rücksetztransistoren RT2 bis RTz vorgesehen, die den Zeilenleitungen L2 bis Lz in der bereits beschriebenen Weise zugeordnet und mit ihren Gates an den Anschluß 5 geführt sind.

Die Auswahltransistoren T11 bis Tz1, die zu den in einer Spalte befindlichen Fotodioden gehören, sind an eine gemeinsame Spaltenleitung SP1 gelegt, die über eine Spaltenauswahltransistor ST1 mit einer Ausleseleitung AL in Verbindung steht. Das Gate von ST1 ist dabei an den Parallelausgang H1 eines Horizontalschieberegisters H gelegt. In analoger Weise sind die in den weiteren Spalten vorgesehenen Auswahltransistoren, z. B. Tzm, mit Spaltenleitungen, z. B. SPm, und über diesen zugeordnete Spaltenauswahltransistoren, z. B. STm, mit der Ausleseleitung AL verbunden, wobei die Gates der Spaltenauswahltransistoren mit den weiteren Parallelausgängen, z. B. Hm, des Horizontalschieberegisters H beschaltet sind. Letzteres weist einen Signaleingang 6 und Taktimpulseingänge 7, 8 auf. Die Ausleseleitung AL ist über einen Widerstand R und eine in Serie dazu liegende Spannungsquelle UA mit einem auf Bezugspotential liegenden Schaltungspunkt 9 verbunden. Dem Widerstand R ist die Schaltstrecke eines Transistors Tv parallel geschaltet, dessen Gate an einem Anschluß 10 liegt, der mit einer Taktimpulsspannung Øv3 belegt ist. Der Verbindungspunkt von AL und R stellt gleichzeitig den Sensorausgang A dar.

Weiterhin ist ein Schieberegister VB vorgesehen, dessen Parallelausgänge B1 bis Bz an die Gates von weiteren Zeilenauswahltransistoren ZT1' bis ZTz' gelegt sind. Letztere verbinden über ihre Schaltstrecken die rechtsseitigen Enden der Zeilenleitungen L1 bis Lz mit einem Schaltungspunkt 11, der mit dem konstanten Potential $V_{DD}$ beschaltet ist. Das Schieberegister VB weist einen Signaleingang 12 und Taktimpulseingänge 13 und 14 auf. Schließlich sind die Gates der Spaltenauswahltransistoren ST1 bis STm über die Schaltstrecken von Schalttransistoren Tv1 bis Tvm an einen mit einer Taktimpulsspannung Øv2 belegten Anschluß 15 geführt, wobei die Gates von Tv1 bis Tvm an einem gemeinsamen Anschluß 16 liegen, der mit einer Taktimpulsspannung Øv1 beschaltet ist.

Die Schieberegister VA, H und VB sind beispielsweise als dynamische 2-Phasen-Schieberegister ausgeführt. Dabei wird dem Signaleingang 2 von VA eine Spannung $P_A$ zugeführt, während die Eingänge

2

3 und 4 mit Taktimpulsspannungen ØA1 und ØA2 belegt sind. Dem Signaleingang 6 des Schieberegisters H wird eine Spannung $P_H$ zugeführt, den Eingängen 7 und 8 Taktimpulsspannungen ØH1 und ØH2. Das Schieberegister VB ist über seinen Signaleingang 12 mit der Spannung $P_B$ und über seine Eingänge 13 und 14 mit Taktimpulsspannungen ØB1 und ØB2 beschaltet.

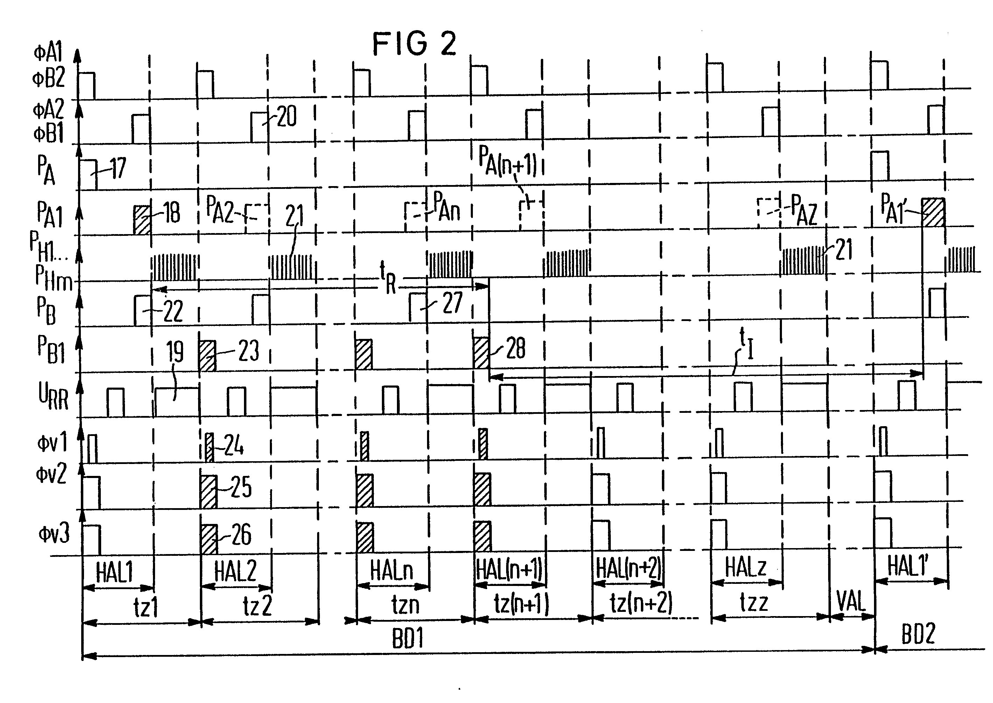

Die genannten Spannungen und Taktimpulsspannungen sind in ihrem zeitlichen Verlauf in Fig. 2 dargestellt. ØA1 und ØB2 sind identisch, so daß das oberste Diagramm von Fig. 2 für beide Taktimpulsspannungen gilt. Ebenso sind ØA2 und ØB1 identisch, so daß beide Spannungen im zweiten Diagramm von Fig. 2 dargestellt sind.

Führt man nun dem Signaleingang 2 von VA einen mit einem Taktimpuls ØA1 zeitlich zusammenfallenden Spannungsimpuls PA zu, der in Fig. 2 mit 17 bezeichnet ist und z. B. eine logische 1 darstellt, so erscheint am Ausgang A1 zeitgleich mit dem nächsten Taktimpuls ØB1 ein Impuls $P_{A1}$, der mit 18 angedeutet ist. Durch diesen wird die Zeilenleitung L1 über den leitend geschaltenden Transistor ZT1 mit dem auf $V_{DD}$ liegenden Anschluß 1 verbunden, so daß alle Auswahltransistoren T11 bis T1m leitend geschalten werden und die infolge einer Belichtung der Sensorelemente D11 bis D1m in diesen angesammelten elektrischen Ladungen auf die zugehörigen Spaltenleitungen SP1 bis SPm übertragen werden. In einem sich anschließenden Zeitintervall treten dann in schneller Folge an den Parallelausgängen H1 bis Hm von H die Impulse $P_{H1}$ bis $P_{Hm}$ auf, die von einem Impuls $P_H$ (einer logischen 1) am Eingang 6 mittels der Taktimpulse ØH1 und ØH2 abgeleitet werden, so daß die Spaltenauswahltransistoren ST1 bis STm einzeln nacheinander kurzzeitig leitend geschalten werden. Die auf die Spaltenleitungen übertragenen Ladungen werden somit sequentiell über die Ausleseleitung AL dem Widerstand R zugeführt, wobei am Ausgang A entsprechende Spannungen auftreten, die das Sensorsignal $u_s$ bilden. Durch einen Impuls $U_{RR}$, der in Fig. 2 mit 19 bezeichnet ist, wird L1 über den Rücksetztransistor RT1 anschließend auf Bezugspotential gesetzt, so daß T11 bis T1m wieder sperren. Der Zeitraum vom Beginn des Taktimpulses ØA1 bis zum Ende des Taktimpulses ØB1 wird in Fig. 2 als Horizontalaustastlükke HAL1 bezeichnet, der Zeitraum vom Beginn von ØA1 bis zum Ende des Impulses $P_{Hm}$ als Zeilendauer tz1.

Mit dem nachfolgenden Taktimpuls ØB1, der in Fig. 2 mit 20 bezeichnet ist, erscheint am Ausgang A2 ein Impuls $P_{A2}$, durch den sämtliche Fotodioden an der Zeilenleitung L2 selektiert werden und ihre Ladung jeweils an die zugeordneten Spaltenleitungen SP1 bis SPm übertragen. Durch eine Folge 21 von Impulsen $P_{H1}$ bis $P_{Hm}$ werden diese Ladungen wieder sequentiell ausgelesen, wobei an A ein entsprechendes Sensorsignal $u_s$ auftritt. Dieser Auslesevorgang wiederholt sich zeilenweise, bis schließlich innerhalb der Zeilendauer tzz ein Impuls $P_{Az}$ an Az auftritt und die Ladungen der an Lz liegenden Fotodioden durch eine Folge 21a von Impulsen $P_{H1}$ bis $P_{Hm}$ in Form eines Sensorsignals $u_s$ über A ausgelesen werden. An tzz schließt sich ein als Vertikalaustastlücke VAL bezeichnetes Zeitintervall an, wobei die Zeitdauer von Beginn von HAL1 bis zum Ende vom VAL als Bilddauer BD1 bezeichnet wird. Innerhalb der nächstfolgenden Bilddauer BD2 tritt zunächst wieder eine Horizontalaustastlücke HAL1' auf, in der die nächste Ladungsübergabe aus den Fotodioden D11 bis D1m an die Spaltenleitungen erfolgt usw.

Nach obigem würden die an L1 liegenden Fotodioden D11 bis D1m eine Integrationszeit haben, die der gesamten Zeitdauer von Beginn des Rücksetzimpulses 19 bis zum Ende des Impulses $P_{A1}'$ entspricht. Wird jedoch dem Eingang 12 von VB innerhalb von HAL1 ein mit dem Taktimpuls ØB1 zeitlich zusammenfallender Impuls $P_B$ zugeführt, der z. B. eine logische 1 darstellt und in Fig. 2 mit 22 bezeichnet ist, so tritt mit dem nächstfolgenden Taktimpuls ØB2 an B1 ein Impuls $P_{B1}$ auf (als 23 bezeichnet), der L1 über ZT1' und den Anschluß 11 wieder an $V_{DD}$ legt. Die Ladungen, die sich bis zum Ende des Impulses 19 in D11 bis D1m angesammelt haben, werden hierdurch auf die Spaltenleitungen SP1 bis SPm übertragen. Die Taktimpulse Øv1, Øv2 und Øv3, die in Fig. 2 mit 24 bis 26 bezeichnet sind, bewirken eine Leitendschaltung von Tv1 bis Tvm, eine Leitendschaltung von ST1 bis STm und eine Überbrückung von R durch Tv, so daß diese Ladungen gleichzeitig dem auf die Spannung von UA rückgesetzten Sensorausgang A zugeführt und somit vernichtet werden, ohne Ausgangssignale zu erzeugen. Diese während HAL2 stattfindende Ladungsvernichtung, die eine Schraffur der Impulse 23 bis 26 angedeutet. Werden nun im Verlauf von tz1 bis tzn insgesamt n Impulse $P_B$ in VB eingelesen, wobei der letzte mit 27 angedeutet ist, so werden die während tz1 bis tzn in D11 bis D1m optisch angesammelten Ladungen wieder vernichtet, und zwar jeweils während der Horizontalaustastlücken HAL2 bis HAL(n+1). Erst während der folgenden Zeilendauer tz(n+1) und des sich anschließenden Zeitraumes bis zum Beginn von $P_{A1}'$ sammeln sich in D11 bis D1m ungestört belichtungsabhängige Ladungen an, die beim Auftreten von PA1' auf die Spaltenleitungen SP1 bis SPm übertragen und dann anschließend als ein neues Sensorsignal $u_s$ ausgelesen werden. Damit ergibt sich für die Fotodioden D11 bis D1m eine Integrationszeit $t_i$ von Ende des letzten innerhalb von BD1 auftretenden Impulses $P_{B1}$, der in Fig. 2 mit 28 bezeichnet ist, bis zum Ende von PA1'. Die Zeit vom Ende des Impulses 18 bis zum Ende des Impulses 28, in der die Ladungen der genannten Fotodioden wiederholt vernichtet werden, wird als Rücksetzzeit $t_R$ bezeichnet.

Man hat es also in der Hand, die Länge der Integrationszeit für die Fotodioden an der Zeilenleitung L1 durch die Anzahl n der innerhalb von BD1 auftretenden Impulse $P_B$ zu bestimmen bzw. zu steuern. Je größer n ist, desto größer wird auch $t_R$ und desto kleiner wird die Integrationszeit $t_i$. Das gleiche gilt selbstverständlich auch für die Fotodioden an den anderen Zeilenleitungen L2 bis Lz, für die sich jeweils um eine Zeilendauer versetzte, entsprechende Rücksetzzeiten und Integrationszeiten ergeben, die sich jeweils zu einer Zeitdauer ergänzen, die BD1 entspricht. Theoretisch kann also die Integrationszeit für alle

**0 075 696**

Sensorelemente zwischen Null und der Bilddauer, z. B. BD1, variiert werden, und zwar in Schritten, die einer Zeilendauer, z. B. tz1, entsprechen.

Sollen bei unterschiedlichen Beleuchtungsstärken E auf dem Bildsensor an A jeweils Sensorsignale $u_s$ auftreten, deren mittlere Amplitude konstant ist, so muß die Zahl n in Abhängigkeit von dem jeweiligen Wert von E gewählt werden. Mit der Gesamtzahl der Zeilen z und der Zeilendauer tz folgt die Rücksetzzeit $t_R$ bei Außerachtlassung der vertikalen Austastlücke zu

$$t_R = n \cdot tz \tag{1}$$

und die Integrationszeit $t_I$ zu

$$t_I = (z - n) \cdot tz. \tag{2}$$

Die mittlere Amplitude des Ausgangssignals $u_s$ des Bildsensors ist proportional zu E und zu $T_I$, so daß sich ergibt:

$$u_s = c_1 \cdot E \cdot t_I, \tag{3}$$

wobei $c_1$ eine erste Konstante bedeutet. Damit $u_s$ konstant bleibt muß gelten:

$$t_I \cdot E = c_2, \tag{4}$$

wobei $c_2$ eine zweite Konstante darstellt. Aus den Beziehungen (3) und (4) folgt

$$n = z - \frac{c_3}{E}. \tag{5}$$

Hier bedeutet $c_3$ eine dritte Konstante.

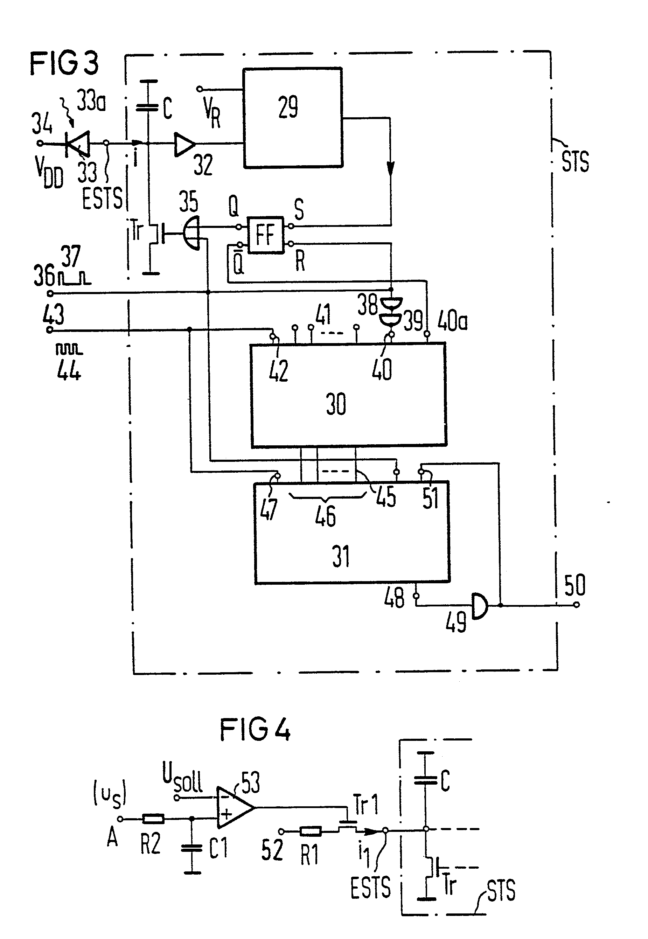

In Fig. 3 ist eine Steueranordnung dargestellt, die die mittlere Amplitude des Sensorsignals $u_s$ unabhängig von der auftretenden Beleuchtungsstärke E auf dem Bildsensor konstant hält. Sie besteht im wesentlichen aus einem Komparator 29, einem Rückwärtszähler 30 und einem Vorwärtszäher 31. Im einzelnen ist der erste Eingang des Komparators 29 mit einer Referenzspannung $V_R$ beschaltet, während sein zweiter Eingang mit dem Ausgang eines Trennverstärkers 32 verbunden ist, dessen Eingang einpolig an einer Fotodiode 33 liegt, die über einen mit der Spannung $V_{DD}$ belegten Anschluß 34 in Sperrichtung vorgespannt ist. Der Verbindungspunkt des Trennverstärkers 32 und der Fotodiode 33 ist einerseits über eine Kapazität C und andererseits über die Schaltstrecke eines Transistors Tr auf das Bezugspotential der Schaltung gelegt. Der Ausgang des Komparators 29 liegt an dem S-Eingang eines RS-Flipflops FF, dessen Ausgang Q an den ersten Eingang eines ODER-Gatters 35 geführt ist. Der Ausgang von 35 ist mit dem Gate des Transistors Tr beschaltet. Der zweite Eingang von 35 ist mit einem Anschluß 36 verbunden, an dem bildfrequente Impulse 37 auftreten, die zeitlich jeweils in die Vertikalaustastlücken VAL (Fig. 2) fallen. Der Anschluß 36 ist weiterhin mit dem R-Eingang von FF und über die Serienschaltung zweier Inverter 38 und 39 mit dem Setzeingang 40 des Zählers 30 verbunden. Der $\bar{Q}$-Ausgang von FF ist an den Freischalte-(enable)-Eingang 40a von 30 gelegt. Der Zähler 30 ist über einen Eingang 41 auf die Anzahl z der Zeilen des Bildsensors einstellbar. Sein Zähleingang 42 ist mit einem Anschluß 43 verbunden, an dem zeilenfrequente Impulse 38 auftreten, die jeweils in den Horizontalaustastlücken HAL1 usw. liegen. Der Zählerstand des Rückwärtszählers 30 ist über Leitungen 45 auf einen Eingang 46 des Vorwärtszählers 31 übertragbar. Der Zähler 31 weist einen Zählereingang 47 auf, der mit dem Anschluß 43 verbunden ist. Der Ausgang 48 für den Zählerübertrag ist über einen Inverter 49 an einen Ausgang 50 der Steuerschaltung geführt, wobei 50 mit dem Freischalteeingang des Zählers 31 verbunden ist.

Die Kapazität C wird in jeder Vertikalaustastlücke VAL durch einen Impuls 37, der den Transistor 35 leitend schaltet, auf Bezugspotential rückgesetzt. Durch eine Belichtung der Fotodiode 33 mit Lichtstrahlen 33a, die auch den Bildsensor belichten, fließt ein der Beleuchtungsstärke E auf der Fotodiode proportionaler Strom i, der C auflädt, so daß die Spannung $V_C$ an C ansteigt. Erreicht $V_C$, die dem unteren Eingang von 29 zugeführt wird, den Wert von $V_R$, so schaltet der Komparator 29 um, d. h. sein Ausgang geht von einer logischen O auf eine logische 1. Die Zeit $t_u$ vom Rücksetzen von C, d. h. vom Auftreten eines Impulses 37, bis zum Umschalten von 29 ergibt sich aus

$$t_u = c_3 \cdot \frac{C \cdot V_R}{E} = \frac{c_4}{E}. \tag{6}$$

ein Vergleich von (4) und (6) zeigt, daß sowohl $t_u$ als auch $t_I$ umgekehrt proportional zur Beleuchtungsstärke E sind. Sobald der Komparator 29 eine logische 1 abgibt, wird FF gesetzt, wobei Q von einer logischen O auf eine logische 1 umgeschaltet wird, die den Transistor Tr über 35 leitend schaltet und damit die Kapazität C entlädt. Gleichzeitig wird dem Freischalteeingang von 30, der bis dahin mit einer logischen 1 belegt war, über Q eine logische O zugeführt, so daß der Zähler 30, der durch den Impuls 37

4

auf die eingestellte Zahl z gesetzt worden war und danach die ankommenden zeilenfrequenten Impulse 44 gezählt hatte, angehalten wird. Der hierbei in 30 erreichte Zählerstand entspricht dem Ausdruck

$$z - \frac{t_I}{tz} = z - \frac{(z - n) \cdot tz}{tz} = n \qquad (7)$$

und somit der Rücksetzzeit $t_R$. Der von 30 erreichte Zählerstand wird zu Beginn der nächsten Vertikalaustastlücke VAL durch einen Impuls 37, der dem Setzeingang 31a des Vorwärtszählers 31 zugeführt wird, an den Eingang 46 desselben übernommen. Der Zähler 31 zählt dann von null beginnend die ankommenden Zeilenfrequenzimpulse 44, bis er den übernommenen Zählerstand erreicht hat. Während dieser Zählvorgangsliegt der den Übertrag von 31 angebende Ausgang 48 auf einer logischen O, so daß am Ausgang 50 eine logische 1 auftritt. Erreicht der Zähler 31 den ihm eingegebenen Zählerstand des Rückwärtszählers 30, so wird über 48 eine logische 1 abgegeben, die einerseits den Ausgang 50 auf eine logische Null zurücksetzt und andererseits den Zähler 31 über den Eingang 51 selbst blockiert. Die Dauer dieses zuletzt beschriebenen Zählvorgangs am Zähler 31 entspricht der Rücksetzzeit $t_R$. In der nächsten Vertikalaustastlücke VAL wird dann der Zähler 31 durch einen Impuls 37 wieder auf O zurückgesetzt. Unabhängig vom Zählvorgang des Zählers 31 läuft auch der Rückwärtszähler 30 und bestimmt bereits die Rücksetzzeit für die nächste Bilddauer BD.

Durch eine in Fig. 4 dargestellte Abänderung der Schaltung nach Fig. 3 kann eine Regelung der mittleren Amplitude des Sensorsignals $u_s$ auf einen Sollwert $u_{soll}$ durchgeführt werden. Zu diesem Zweck wird der Eingang ESTS der Steuerschaltung STS über die Source-Drain-Strecke eines Transistors Tr1 und einen hochohmigen Widerstand R1 mit einem Anschluß 52 verbunden, der mit der Spannung $V_{DD}$ beschaltet ist. Der Widerstand R1 bewirkt dabei, daß der Transistor TR1 die Funktion einer steuerbaren Stromquelle mit hohem Innenwiderstand hat. Das Gate von Tr1 ist mit dem Ausgang eines Differenzverstärkers 53 verbunden, dessen negativer Eingang mit der Spannung $u_{soll}$ belegt ist und dessen positiver Eingang über einen Widerstand R2 mit dem Sensorausgang A (Fig. 1) verbunden ist. Weiterhin ist der positive Eingang von 53 über eine Kapazität C1 an das Bezugspontential der Schaltung gelegt.

In Fig. 4 wird das Sensorsignal $u_s$ mittels des aus C1 und R2 gebildeten Tiefpasses über die Dauer mehrerer Bilder gemittelt. Das gemittelte Signal wird im Differenzverstärker 53 mit $u_{soll}$ verglichen, wobei die Differenz der Eingangssignale an 53 den Strom i1 des als Konstantstromquelle geschalteten Transistors Tr1 steuert. Dabei ersetzt $i_1$ den Strom i der Fotodiode von Fig. 4. Der weitere Funktionsablauf in der Steuerschaltung STS wurde bereits anhand von Fig. 3 beschrieben. Mit der Anordnung nach Fig. 4 wird erreicht, daß der gemittelte Wert von $u_s$ bis auf eine Regelabweichung dem Wert $u_{soll}$ angeglichen ist, so daß eine sehr genaue Kontrolle des Sensorsignals erfolgt.

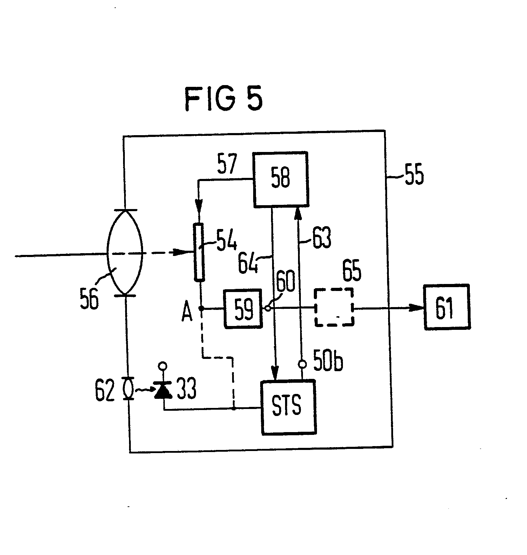

Die Anwendung eines nach der Erfindung ausgebildeten Halbleiter-Bildsensors bei einer elektronischen Kamera ist in Fig. 5 schematisch dargestellt. Ein Bildsensor gemäß Fig. 1 ist dabei in Form einer monolithisch integrierten Halbleiteranordnung 54 in der Bildebene einer elektronischen Kamera 55 angeordnet, die mit einem Objektiv 56 ausgestattet ist. Dem Bildsensor werden die benötigten Spannungen und Taktimpulsspannungen über Leitungen 57 von einer Ablaufsteuerung 58 zugeführt, wobei die Sensorsignale über den Ausgang A einer Schaltung 59 mitgeteilt werden, in der sie zu einem Videosignal verarbeitet werden, das mit zeilen- und bildfrequenten Impulsen versehen ist. Das Videosignal gelangt über einen Ausgang 60 zu einem Videorecorder 65 oder einem Fernsehgerät 61. Der Steuerschaltung STS kann dabei gemäß Fig. 3 eine Fotodiode 33 vorgeschaltet sein, die durch eine Hilfsoptik 62 beleuchtet werden. Andererseits kann der Eingang ESTS in der anhand von Fig. 4 erläuterten Weise mit dem Ausgang A verbunden sein, was in Fig. 5 durch eine gestrichelte Linie angedeutet ist. Die am Ausgang 50 auftretenden Impulse $P_B$ werden über eine Leitung 63 der Ablaufsteuerung 58 und über diese dem Bildsensor 54 zugeführt. Andererseits werden die zum Betrieb von STS benötigten Impulse 37 und 44 in der Ablaufsteuerung 68 erzeugt und über eine Leitung 64 zur Steuerschaltung STS übertragen. Bei der elektronischen Kamera 55 kann es sich um eine Laufbild- oder um eine Festbildkamera handeln, wobei im letzteren Fall und bei der Einrichtung eines Regelkreises für die Sensorsignale $u_s$ zweckmäßigerweise ein Zeitschalter 65 dem Ausgang 60 nachgeordnet wird, der die Weitergabe der Videosignale erst dann ermöglicht, wenn die sich bei der Ausrichtung der Kamera auf ein bestimmtes Objekt zunächst ergebenden Regelschwingungen abgeklungen sind. Die Steuerung oder Reglung der Integrationszeit der Sensorelemente des Bildsensors 54 ersetzt in Fig. 5 die bisher übliche Belichtungssteuerung bei elektronischen Kameras, die durch eine mechanische oder elektromechanische Blendenbetätigung und/oder durch eine Belichtungszeitsteuerung erfolgt e.

Die Bilddauer, z. B. BD1, kann zweckmäßigerweise einer Fernsehnorm gemäß 20 ms betragen, wobei dann die Horizontalaustastlücken, z. B. HAL1, 12 µs, die Zeilendauer, z. B. tz1, 64 µs und die Vertikalaustastlücke, z. B. VAL1, etwa 1, 2 ms betragen.

Als Sensorelemente können anstelle der bisher beschriebenen Fotodioden D11 usw. auch CID-Sensorelemente verwendet werden, die jeweils aus einem Paar nebeneinanderliegender MIS-Kondensatoren bestehen, wobei die äußere Elektrode des einen Kondensators einen solchen Paares an die Zeilenleitung und die äußere Elektrode des anderen Kondensators an die zugeordnete Spaltenleitung geschaltet sind. Ein Bildsensor mit CID-Sensorelementen ist beispielsweise in dem IEEE Journal of Solid States Circuits, Vol. SC-11, Februar 1976, Seiten 121 bis 128, insbesondere Figuren 1 und 2, beschrieben. Zur Vernichtung von während der Rücksetzzeit $t_R$ in den Sensorelementen angesammelten Ladungen sind hierbei sowohl die Spaltenleitungen als auch gleichzeitig die jeweils betroffenen Zeilenleitungen auf das Bezugspotential der Schaltung rückzusetzen.

**Patentansprüche**

1. Zweidimensionaler Halbleiter-Bildsensor mit auf einem dotierten Halbleiterkörper in Zeilen und Spalten angeordneten Sensorelementen (D11), bei dem Zeilenleitungen (L1 ... Lz), die über zugeordnete Parallelausgänge (A1 ... Az) eines ersten Vertikal-Schieberegisters (VA) ansteuerbar sind, zur Selektion der Sensorelemente dienen, bei dem die Ausgänge der Sensorelemente (D11) im selektierten Zustand mit Spaltenleitungen (SP1 ... SPm) verbunden sind, bei dem ein Sensorausgang (A) zum sequentiellen Auslesen der jeweils parallel auf die Spaltenleitungen übertragenen Signale der Sensorelemente (D11) vorgesehen ist und bei dem die Spaltenleitungen über Spaltenauswahltransistoren (ST1 ... STm) mit einer zum Sensorausgang (A) führenden Ausleseleitung (AL) verbunden sind, wobei die Steueranschlüsse der Spaltenauswahltransistoren (ST1 ... STm) mit Parallelausgängen (H1 ... Hm) eines Horizontal-Schieberegisters (H) verbunden sind, dadurch gekennzeichnet, daß die Zeilenleitungen (L1 ... Lz) über erste Zeilenauswahltransistoren (ZT1 ... ZTz) mit einem auf einer konstanten Spannung liegenden Anschluß (1) verbunden sind, daß die Steueranschlüsse der ersten Zeilenauswahltransistoren (ZT1 ... ZTz) mit den Parallelausgängen (A1 ... Az) des ersten Vertikal-Schieberegisters beschaltet sind, daß die Zeilenleitungen (L1 ... Lz) auch über zweite Zeilenauswahltransistoren (ZT1' ... ZTz') mit einem auf der konstanten Spannung liegenden Anschluß (11) verbunden sind, daß die Steueranschlüsse der zweiten Zeilenauswahltransistoren (ZT1' ... ZTz') mit den Parallelausgängen (B1 ... Bz) eines zweiten Vertikal-Schieberegisters (VB) beschaltet sind und daß alle Spaltenleitungen (SP1 ... SPm) an einen mit einer konstanten Spannung belegten Schaltungspunkt (A) gleichzeitig anschaltbar sind.

2. Zweidimensionaler Halbleiter-Bildsensor nach Anspruch 1, dadurch gekennzeichnet, daß die Zeilenleitungen (L1 ... Lz) über Rücksetztransistoren (RT1 ... RTz) mit einem auf Bezugspotential liegenden Schaltungspunkt (4a) verbunden sind.

3. Zweidimensionaler Halbleiter-Bildsensor nach Anspruch 2, dadurch gekennzeichnet, daß die Steueranschlüsse der Spaltenauswahltransistoren (ST1 ... STm) über die Schaltstrecken von Schalttransistoren (Tv1 ... Tvm) mit einem mit einer ersten Taktimpulsspannung (Øv2) beschalteten Anschluß (15) verbunden sind und daß die Steueranschlüsse der Schalttransistoren (Tv1 ... Tvm) an einen mit einer weiteren Taktimpulsspannung (Øv1) belegten Anschluß (16) geführt sind.

4. Zweidimensionaler Halbleiter-Bildsensor nach einem der Ansprüche 1 bis 3, dadurch gekennzeichnet, daß der Sensorausgang (A) über einen Widerstand R an eine Spannungsquelle (UA) geschaltet ist.

5. Zweidimensionaler Halbleiter-Bildsensor nach Anspruch 4, dadurch gekennzeichnet, daß der Widerstand (R) durch die Schaltstrecke eines Transistors (Tv) überbrückt ist, der mit einer weiteren Taktimpulsspannung (Øv3) angesteuert wird.

6. Zweidimensionaler Halbleiter-Bildsensor nach einem der Ansprüche 1 bis 5, dadurch gekennzeichnet, daß ein einem fotoelektrischen Wandler (33), insb. einer Fotodiode, nachgeschalteter Kondensator (C) an dem ersten Eingang eines Komparators (29) liegt, dessen zweiter Eingang mit einer Referenzspannung ($V_R$) beschaltet ist, daß der Ausgang des Komparators (29) über ein Flipflop (FF) mit einem Freischalteeingang (40a) eines Rückwärtszählers (30) verbunden ist, der auf die Gesamtzahl z der Zeilen des Bildsensors einstellbar ist, daß ein Vorwärtszähler (31) vorgesehen ist, auf den der Zählerstand des Rückwärtszählers übertragbar ist, daß beide Zähler (30, 31) Zähleingänge (42, 47) für zeilenfrequente Taktimpulse (44) aufweisen, daß der Ausgang (48) des Vorwärtszählers (31) für einen Übertrag über einen Inverter (49) an einen Ausgang 50 geführt ist, der mit dem Signaleingang (12) des zweiten Vertikal-Schieberegisters (VB) beschaltet ist.

7. Zweidimensionaler Halbleiter-Bildsensor nach Anspruch 6, dadurch gekennzeichnet, daß der Sensorausgang (A) über ein RC-Glied (R2, C1) mit dem einen Eingang eines Differenzverstärkers (53) verbunden ist, dessen zweitem Eingang eine Spannung ($U_{soll}$) zugeführt wird, die einem Sollwert des mittleren Sensorsignals entspricht, und daß dem Differenzverstärker (53) eine durch dessen Ausgangsspannung steuerbare Stromquelle mit großem Innenwiderstand (Tr1) nachgeschaltet ist, die anstelle des fotoelektrischen Wandlers (33) den Kondensator (C) am Eingang des Komparators (29) auflädt.

8. Verfahren zum Betrieb eines zweidimensionalen Halbleiter-Bildsensors, insbesondere nach einem der vorhergehenden Ansprüche, dadurch gekennzeichnet, daß jede einzelne der Zeilen von Sensorelementen (D11 ... D1m) nach jeder Selektion, die zum Zwecke des Übertragens der optisch gebildeten Signale ihrer einzelnen Sensorelemente auf die Spaltenleitungen (SP1 ... SPm) und für eine nachfolgende sequentielle Auslesung vorgenommen wird, innerhalb der Zeiträume, die jeweils für das Übertragen der Signale der Sensorelemente der nächstfolgenden n Zeilen auf die Spaltenleitungen (SP1 ... SPm) vorgesehen sind, erneut selektiert wird, wobei diese Selektionen jeweils zeitversetzt gegen die in diesen Zeiträumen erfolgenden Übertragungen der Signale der Sensorelemente der n Zeilen vorgenommen werden, daß die genannten erneuten Selektionen zum Zwecke des Auslesens und der Beseitigung der in den Sensorelementen (D11 ... D1m) der betrachteten Zeile zwischenzeitlich angesammelten, optisch

**0 075 696**

erzeugten Ladungen vorgenommen werden, wobei die für die nächstfolgende Auslesung der betrachteten Zeile maßgebliche Integrationszeit ($t_I$) erst nach der n'ten Beseitigung der zwischenzeitlich optisch erzeugten Ladungen beginnt und daß die zur Beseitigung der zwischenzeitlich optisch erzeugten Ladungen erforderlichen Selektionen der Zeilenleitungen (L1 ... Lz) über die Parallelausgänge (B1 ... Bz) des zweiten Vertikal-Schieberegisters (VB) vorgenommen werden, dessen Signaleingang (12) zu diesem Zweck eine Folge von n Impulsen zugeführt wird.

9. Verfahren nach Anspruch 8, dadurch gekennzeichnet, daß die Anzahl n der zur Ladungsbeseitigung dienenden Selektionen in Abhängigkeit von der Beleuchtungsstärke auf dem zweidimensionalen Bildsensor ausgewählt wird, und zwar derart, daß die mittlere Amplitude des Sensorsignals konstant bleibt.

10. Verfahren nach Anspruch 8, dadurch gekennzeichnet, daß das Sensorsignal gemittelt wird und die Abweichung des gemittelten Sensorsignals von einem vorgegebenen Sollwert dazu benutzt wird, die Anzahl n der zur Ladungsbeseitigung dienenden Selektionen so auszuwählen, daß die genannte Abweichung möglichst klein ist.

11. Verwendung des zweidimensionalen Bildsensors nach einem der Ansprüche 1 bis 7 zur elektronischen Auswertung einer auf die Bildebene einer elektronischen Kamera projizierten Abbildung, wobei das von der Abbildung abgeleitete Sensorsignal zu einem Videosignal weiterverarbeitet wird.

**Claims**

1. A two-dimensional semiconductor image sensor comprising sensor elements (D11) arranged in rows and columns on a doped semiconductor body, wherein row lines (L1 ... Lz) are driven via assigned parallel outputs (A1 ... Az) of a first vertical shift register (VA), to select sensor elements, the outputs of the sensor elements (D11) in the selected state being connected to column lines (SP1 ... SPm), a sensor output (A) being provided for sequential read-out of the signals from the sensor elements (D11), which are each transmitted in parallel to the column lines, and the column lines are connected via column selector transistors (ST1 ... STm) to a read-out line (AL) which leads to the sensor output (A), and the control terminals of the column selector transistors (ST1 ... STm) being connected to parallel outputs (H1 ... Hm) of a horizontal shift register (H), characterised in that the row lines (L1 ... Lz) are connected via first row selector transistors (ZT1 ... ZTz) to a terminal (1) which carries a constant voltage, that the control terminals of the first row selector transistors (ZT1 ... ZTz) are connected to the parallel outputs (A1 ... Az) of the first vertical shift register, that the row lines (L1 ... Lz) are also connected via second row selector transistors (ZT1' ... ZTz') to a terminal (11) which carries the constant voltage, that the control terminals of the second row selector transistors (ZT1' ... ZTz') are connected to the parallel outputs (B1 ... Bz) of a second vertical shift register (VB), and that all the column lines (SP1 ... SPm) can be simultaneously connected via a circuit point (A) to a constant voltage.

2. A two-dimensional semiconductor image sensor as claimed in Claim 1, characterised in that the row lines (L1 ... Lz) are connected via reset transistors (RT1 ... RTz) to a circuit point (4a) which carries reference potential.

3. A two-dimensional semiconductor image sensor as claimed in Claim 2, characterised in that the control terminals of the column selector transistors (ST1 ... STm) are connected via the switching paths of the switching transistors (Tv1 ... Tvm) to a terminal (15) connected to a first clock pulse voltage (Øv2), and that the control terminals of the switching transistors (Tv1 ... Tvm) lead to a terminal (16) connected to a further clock pulse voltage (Øv1).

4. A two-dimensional semiconductor image sensor as claimed in one of Claims 1 to 3, characterised in that the sensor output (A) is connected via a resistor (R) to a voltage source (UA).

5. A two-dimensional semiconductor image sensor as claimed in Claim 4, characterised in that the resistor (R) is bridged by the switching path of a transistor (Tv) driven by a further clock pulse voltage (Øv3).

6. A two-dimensional semiconductor image sensor as claimed in one of Claims 1 to 5, characterised in that a capacitor (C) connected to the output of a photo-electric converter (33), in particular a photodiode, is connected to the first input of a comparator (29) whose second input is connected to a reference voltage ($V_R$), that the output of the comparator (29) is connected via a flip-flop (FF) to a clearing input (40a) of a backwards counter (30) set at the total number z of the rows of the image sensor, that a forwards counter (31) is provided to which the count of the backwards counter can be transferred, that the two counters (30, 31) have counting inputs (42, 47) for row-frequency clock pulses (44), and that the output (48) of the forwards counter (31) for a carry leads via an inverter (49) to an output (50) connected to the signal input (12) of the second vertical shift register (VB).

7. A two-dimensional semiconductor image sensor as claimed in Claim 6, characterised in that the sensor output (A) is connected via an RC-component (R2, C1) to the first input of a differential amplifier (53) whose second input is supplied with a voltage ($U_{soll}$) which corresponds to a theoretical value of the mean sensor signal, and that the differential amplifier (53) is connected at its output to a current source controlled by its output voltage and having a high internal resistance (Tr1), which charges the capacitor (C) at the input of the comparator (29) in the place of the photo-electric converter (29).

7

8. A method of operating a two-dimensional semiconductor image sensor, in particular as claimed in one of the preceding Claims, characterised in that each of the rows of sensor elements (D11 ... D1m), following each selection carried out in order to transmit the optically-formed signals of their individual sensor elements to the column lines (SP1 ... SPm) and for a following sequential read-out, is reselected during the intervals of time provided for the transmission of the signals of the sensor elements of the next n rows to the column lines (SP1 ... SPm), these selections taking place in time-staggered fashion in relation to the transmissions of the signals of the sensor elements of the n rows during these time intervals, that the aforesaid reselections take place in order to read-out and eliminate the optically-produced charges which have meanwhile accumulated in the sensor elements (D11 ... D1m) of the row in question, the integration time ($t_I$) governing the next read-out of the row in question only commencing after the n-th elimination of the currently optically-produced charges, and that the selections of the row lines (L1 ... Lz) required to eliminate the currently optically-produced charges take place via the parallel outputs (B1 ... Bz) of the second vertical shift register (VB), whose signal input (12) is supplied with a sequence of n pulses for this purpose.

9. A method as claimed in Claim 8, characterised in that the number n of the selections which serve to eliminate the charges is selected in dependence upon the illumination level on the two-dimensional image sensor, such that the mean amplitude of the sensor signal remains constant.

10. A method as claimed in Claim 8, characterised in that the sensor signal is averaged and the deviation of the averaged sensor signal from a predetermined theoretical value is used to select the number n of the selections which serve to eliminate the charges such that the aforesaid deviation is as small as possible.

11. Use of the two-dimensional image sensor as claimed in one of Claims 1 to 7 for the electronic analysis of an image projected onto the image plane of an electronic camera, where the sensor signal derived from the image is further processed to form a video signal.

## Revendications

1. Détecteur d'images bidimensionnel à semiconducteurs comportant des éléments détecteurs (D11) disposés suivant des lignes et des colonnes sur un corps semiconducteur dopé, et dans lequel des conducteurs de lignes (L1 ... Lz), qui peuvent être commandés par l'intermédiaire de sorties parallèles associées (A1 ... Az) d'un premier registre à décalage vertical (VA), sont utilisés pour la sélection des éléments détecteurs, et dans lequel les sorties des éléments détecteurs (D11) sont reliées à l'état sélectionné à des conducteurs de colonnes (SP1 ... SPm), et dans lequel une sortie (A) d'un détecteur est prévue pour réaliser la lecture séquentielle des signaux des éléments détecteurs (D11), transmis respectivement en parallèle dans les conducteurs de colonnes, et dans lequel des conducteurs de colonnes sont reliés par l'intermédiaire de transistors (ST1 ... STm) de sélection de colonnes à un conducteur de lecture (AL) aboutissant à la sortie (A) du détecteur, les bornes de commande des transistors (ST1 ... STm) de sélection de colonnes étant reliées à des sorties parallèles (H1 ... Hm) d'un registre à décalage horizontal (H), caractérisé par le fait que les conducteurs de lignes (L1 ... Lz) sont reliés par l'intermédiaire de premiers transistors (ZT1 ... ZTz) de sélection de lignes à une borne (1) placée à une tension constante, que les bornes de commande des premiers transistors (ZT1 ... ZTz) de sélection de lignes sont raccordées aux sorties parallèles (A1 ... Az) du premier registre à décalage vertical, que les conducteurs de lignes (L1 ... Lz) sont également reliés par l'intermédiaire de seconds transistors (ZT1' ... ZTz') de sélection de lignes à une borne (11) placée à une tension constante, que les bornes de commande des seconds transistors (ZT1' ... ZTz') de sélection de lignes sont raccordées aux sorties parallèles (B1 ... Bz) d'un second registre à décalage vertical (VB), et que les conducteurs de colonnes (SP1 ... SPm) peuvent être raccordés simultanément à un point (A) du circuit, qui est placé à une tension constante.

2. Détecteur d'images bidimensionnel à semiconducteurs suivant la revendication 1, caractérisé par le fait que les conducteurs de lignes (L1 ... Lz) sont reliés par l'intermédiaire de transistors de remise à l'état initial (RT1 ... RTz) à un point (4a) du circuit placé à un potentiel de référence.

3. Détecteur d'images bidimensionnel à semiconducteurs suivant la revendication 2, caractérisé par le fait que les bornes de commande des transistors (ST1 ... STm) de sélection de colonnes sont reliées par l'intermédiaire de voies de commutation de transistors de commutation (Tv1 ... Tvm) à une borne (15) à laquelle est appliquée une première tension impulsionnelle de cadence ($Øv2$) et que les bornes de commande des transistors de commutation (Tv1 ... Tvm) sont raccordées à une borne (16) à laquelle est appliquée une autre tension impulsionnelle de cadence ($Øv1$).

4. Détecteur d'images bidimensionnel à semiconducteurs suivant l'une des revendications 1 à 3, caractérisé par le fait que la sortie (A) du détecteur est raccordée par l'intermédiaire d'une résistance (R) à une source de tension (UA).

5. Détecteur d'images bidimensionnel à semiconducteurs suivant la revendication 4, caractérisé par le fait que la résistance (R) est shuntée par la voie de commutation d'un transistor (Tv), qui est commandé par une autre tension impulsionnelle de cadence ($Øv3$).

6. Détecteur d'images bidimensionnel à semiconducteurs suivant l'une des revendications 1 à 5,

**0 075 696**

caractérisé par le fait qu'un condensateur (C) branché en aval d'un convertisseur photoélectrique (33), notamment une photodiode, est raccordé à la première entrée d'un comparateur (29), dont la seconde entrée est placée à une tension de référence ($V_R$), et la sortie du comparateur (29) est raccordée par l'intermédiaire d'une bascule bistable (FF) à une entrée de libération (40a) d'un compteur à comptage régressif (30), qui peut être réglé sur le nombre total (z) des lignes du détecteur d'images, qu'il est prévu un compteur à comptage progressif (31), auquel l'état de comptage du compteur à comptage régressif peut être transmis, que les deux compteurs (30, 31) comportent des entrées de comptage (42, 44) pour des impulsions de cadence (44) apparaissant à la fréquence des lignes, que la sortie (48) du compteur à comptage progressif (31) est raccordée, pour un report, par l'intermédiaire d'un inverseur (49) à une sortie (50) qui est raccordée à l'entrée (12) des signaux du second registre à décalage vertical (VB).

7. Détecteur d'images bidimensionnel à semiconducteurs suivant la revendication 6, caractérisé par le fait que la sortie (A) du détecteur est reliée par l'intermédiaire d'un circuit RC (R2, C1) à l'entrée d'un amplificateur différentiel (53), à la seconde entrée duquel est appliquée une tension ($U_{consigne}$), qui correspond à une valeur de consigne du signal moyen du détecteur, et qu'en aval de l'amplificateur différentiel (53) se trouve branchée une source de courant, qui peut être commandée par la tension de sortie de cet amplificateur et possède une résistance interne (Tr1) élevée et qui, à la place du convertisseur photoélectrique (33), charge le condensateur (C) branché à l'entrée du comparateur (29).

8. Procédé d'utilisation d'un détecteur d'images bidimensionnel à semiconducteurs, notamment suivant l'une des revendications précédentes, caractérisé par le fait qu'après chaque sélection qui est réalisée en vue de transmettre les signaux formés optiquement des différents éléments détecteurs des lignes d'éléments détecteurs (D11 ... D1m), dans les conducteurs de colonnes (SP1 ... SPm) et pour effectuer la lecture séquentielle ultérieure, on sélectionne à nouveau chacune des lignes d'éléments détecteurs pendant les intervalles de temps qui sont présents respectivement pour la transmission des signaux des éléments détecteurs des n lignes immédiatement suivantes aux conducteurs de colonnes (SP1 ... SPm), ces sélections étant réalisées en étant respectivement décalées dans le temps par rapport aux transmissions, exécutées pendant ces intervalles de temps, des signaux des éléments détecteurs des n lignes, qu'on réalise lesdites sélections réitérées pour lire et éliminer les charges produites optiquement, qui se sont accumulées entre-temps dans les éléments détecteurs (D11 ... D1m) de la ligne considérée, le temps d'intégration ($t_i$), qui est déterminant pour la lecture immédiatement suivante de la ligne considérée, ne commençant qu'après la n-ème élimination des charges produites entre-temps par voie optique, et qu'on réalise les sélections, qui sont nécessaires pour éliminer les charges produites entre-temps par voie optique, des conducteurs de lignes (L1 ... Lz) par l'intermédiaire des sorties parallèles (B1 ... Bz) du second registre à décalage vertical (VB), à l'entrée (12) des signaux duquel se trouve envoyée, à cet effet, une suite de n impulsions.

9. Procédé suivant la revendication 8, caractérisé par le fait que le nombre n des sélections utilisées pour l'élimination des charges est choisi en fonction de l'intensité d'éclairage tombant sur le détecteur d'images bidimensionnel, et ce de telle manière que l'amplitude moyenne du signal du détecteur reste constante.

10. Procédé suivant la revendication 8, caractérisé par le fait qu'on forme la moyenne du signal du détecteur et qu'on utilise l'écart du signal moyen du détecteur par rapport à une valeur de consigne prédéterminée pour choisir le nombre n des sélections utilisées pour l'élimination des charges afin que ledit écart soit aussi faible que possible.

11. Utilisation du détecteur d'images bidimensionnel suivant l'une des revendications 1 à 7 pour l'évaluation électronique d'une image projetée sur le plan image d'un appareil électronique de prise de vues, le signal du détecteur, obtenu à partir de l'image, étant transformé ensuite en un signal vidéo.

9

FIG 1

FIG 2

0 075 696

FIG 3

FIG 4

# FIG 5